# DEMANDE DE BREVET EUROPEEN

(11) **EP 3 378 818 A1**
(43) Date de publication de la demande: **26.09.2018**
(21) Numéro de dépôt: 18162673.0
(22) Date de dépôt: 19.03.2018
(51) Int. Cl.: B65H 75/14, B65H 75/24, B65H 75/30, B65H 75/42, B65H 75/44

(54) **DISPOSITIF D'ENROULEMENT ET/OU DE DEROULEMENT DE FILS**

(30) Priorité: 22.03.2017 FR 1770282
(71) Demandeur: Engel, Materne, 67120 Avolsheim (FR)
(72) Inventeur: Engel, Materne, 67120 Avolsheim (FR)
(74) Mandataire: Hege, Frédéric

(57) **Abrégé**

La présente invention concerne un dispositif d'enroulement et/ou de déroulement de fils comportant au moins une bobine primaire (1) mobile autour d'un axe (6), munie d'au moins un premier et un deuxième flasques (3, 4) ledit noyau (5) comportant un moyen de réglage de son diamètre. Ledit dispositif d'enroulement et/ou de déroulement est particulier en ce qu'il comporte en outre un arbre (17) mobile autour dudit axe (6), et au moins une bobine secondaire (16) mobile autour dudit axe (6), les bobines primaire (1) et secondaire (16) comportant chacune un moyen de solidarisation audit arbre (17).

La présente invention concerne aussi un procédé d'enroulage et/ou de déroulage de fils par le moyen d'un dispositif selon l'invention.

## Description

La présente invention se situe dans le domaine de la viticulture. Elle concerne plus particulièrement un enrouleur/dérouleur de fil à vignes.

Le palissage est une technique couramment utilisée en viticulture, qui consiste à placer des fils sur des piquets, formant des rangs parallèles. Le long de ces rangs sont placés les pieds de vignes, puis les branches de la vigne sont attachées aux fils. Cette technique procure différents avantages. Les cultures poussant le long des fils se développent en lignes nettes dont on peut choisir l'espacement ; ainsi l'entretien des vignes, le traitement et les vendanges sont facilités. Les branches des vignes étant guidées pour pousser vers le haut et avec un certain espacement entre chaque rang, les feuilles reçoivent également un ensoleillement optimal.

Cependant, avec le temps et les intempéries, il est parfois nécessaire de remplacer les fils de palissage usés ou rouillés, par des fils nouveaux. De plus, à l'occasion d'une restructuration de parcelle tous les fils doivent être enlevés et de nouveaux fils doivent être mis en place. Par ailleurs, des fils releveurs en nylon doivent être installés en juin et retirés après la vendange, et il est utile de pouvoir les récupérer de manière à pouvoir être réutilisés. Le fil à retirer est ainsi enroulé autour d'une bobine afin d'être transporté hors de la vigne. Le fil nouveau à placer, qui se présente sous la forme d'une bobine, est installé sur les piquets au fur et à mesure de son déroulage le long d'un rang de vigne.

Des machines existent permettant d'enrouler un fil à retirer, ou de dérouler un fil à placer le long d'un rang de vigne. Cependant de telles machines son souvent conçues pour le déroulement, et lorsqu'elles sont employées pour l'enroulement, elles ont tendance à déchirer le fil.

Le document FR2654715 divulgue un dévidoir de fils servant au palissage, capable de dérouler un fil le long d'un rang de vigne, ou alors d'enrouler un fil pour le retirer d'une vigne. Pour remplacer un fil par un autre, il faut donc procéder en deux étapes, et parcourir deux fois les rangs de vigne.

La présente invention a pour objet de pallier au moins en partie à ces inconvénients. A cet effet, elle propose un dispositif d'enroulement et/ou de déroulement de fils comportant au moins une bobine primaire mobile autour d'un axe, munie d'au moins un premier et un deuxième flasques et d'un noyau, ledit. noyau comportant un moyen de réglage de son diamètre. Ce dispositif d'enroulement et/ou de déroulement est particulier en ce qu'il comporte en outre un arbre mobile autour dudit axe, et au moins une bobine secondaire mobile autour dudit axe, les bobines primaire et secondaire comportant chacune un moyen de solidarisation audit arbre.

Grâce à ces dispositions, le dispositif selon l'invention peut être utilisé pour enrouler et/ou dérouler des fils de natures différentes, ou encore un tuyau d'irrigation, assimilé à un fil dans le cadre de la présente invention, en adaptant le diamètre du noyau au rayon de courbure minimal du fil et à l'encombrement du fil une fois celui-ci entièrement enroulé. Il devient ainsi possible en particulier de récupérer du fil d'une manière qui permet son réemploi, ce qui est particulièrement intéressant lorsqu'il s'agit de fil inox, très cher à l'achat.

Selon d'autres caractéristiques :
- ledit noyau peut comporter au moins trois, de préférence six barreaux fixés chacun audit premier flasque de manière réglable le long d'un rayon dudit premier flasque, ce qui est un moyen simple d'obtenir un noyau résistant, assurant un bon maintien au fil et présentant un diamètre configurable,
- lesdits barreaux peuvent être fixés chacun à un rayon par le moyen de deux barrettes pincées de part et d'autre d'un rayon par deux fixations aptes à être serrées et desserrées, comme des vis, constituant un mode de réalisation robuste et simple, afin de faire varier facilement le diamètre du noyau en peu de temps,
- ledit deuxième flasque peut comporter des butées de réception, en particulier des butées de réception concaves, aptes à recevoir chacune un barreau, de sorte à maintenir le diamètre du noyau, ceci assurant un diamètre stable au noyau lorsqu'il est sous pression, par exemple lors de l'enroulement ou du déroulement d'un fil,
- ladite bobine primaire peut comporter au moins un troisième flasque, formant avec ledit deuxième flasque une deuxième bobine, lesdits barreaux ayant une longueur suffisante pour former aussi le noyau de ladite deuxième bobine, une deuxième bobine pouvant être ajoutée au dispositif de manière simple, le dispositif pouvant ensuite être utilisé pour enrouler et/ou dérouler deux fils distincts,
- l'écartement entre les deuxième et troisième flasques peut être différent de l'écartement entre les premiers et deuxième flasques, de sorte à former deux bobines de largeur différente, la largeur des bobines pouvant ainsi être adaptée au fil à enrouler et/ou dérouler, et par exemple au volume nécessaire pour accueillir le fil entièrement enroulé,
- ledit dispositif d'enroulement et/ou de déroulement peut comporter une poignée adaptable à l'extrémité distale dudit premier flasque d'un barreau, de sorte à permettre un actionnement rotatif manuel de ladite bobine primaire, ceci permettant de manière simple un actionnement manuel du dispositif,
- ledit dispositif d'enroulement et/ou de déroulement peut comporter un arbre mobile autour dudit axe, et au moins une bobine secondaire mobile autour dudit axe, et reliée à ladite bobine primaire par le moyen dudit arbre de sorte à être solidaire en rotation de ladite bobine primaire, ainsi une seconde bobine peut être utilisée simultanément à la première ; il est par exemple possible d'enrouler un fil usé sur la bobine primaire pendant qu'on déroule un fil neuf sur la bobine secondaire, ou l'inverse,
- le diamètre du noyau de la bobine secondaire peut être différent du diamètre du noyau de la bobine primaire, les bobines primaire et secondaire pouvant ainsi être utilisées pour enrouler et/ou dérouler deux fils de nature différente, par exemple présentant des rayons de courbure minimaux différents, ou des diamètres et/ou longueurs différents.

La présente invention concerne aussi un procédé d'enroulage et/ou de déroulage de fils par le moyen d'un dispositif selon l'invention. Ce procédé est particulier en ce que la bobine primaire enroule un fil pendant que la bobine secondaire déroule un fil.

Grâce à ces dispositions, on peut facilement remplacer un fil par un autre, par exemple des fils de palissage dans une vigne. Le fil usé à retirer peut être enroulé sur la bobine primaire, pendant que le fil à poser peut être déroulé à partir de la bobine secondaire, ou l'inverse.

La présente invention sera mieux comprise à la lecture de la description détaillée qui fait suite, en référence aux figures annexées dans lesquelles :
- La figure 1 est une vue en perspective d'un dispositif d'enroulement et/ou de déroulement selon un premier mode de réalisation de l'invention.
- La figure 2 est une vue en perspective d'une bobine selon un second mode de réalisation de l'invention.
- La figure 3 est une vue en perspective d'un détail de la bobine de la fig. 2.
- La figure 4 est une vue en perspective d'un premier flasque selon un mode de réalisation préféré de l'invention.
- La figure 5 est une vue du dessus du dispositif utilisé pour enrouler un premier fil et dérouler un deuxième fil simultanément.
- La figure 6 est une vue en perspective d'une bobine comportant une plaque de séparation.
- La figure 7 est une vue en perspective d'une bobine comportant des plaques d'extrémité.

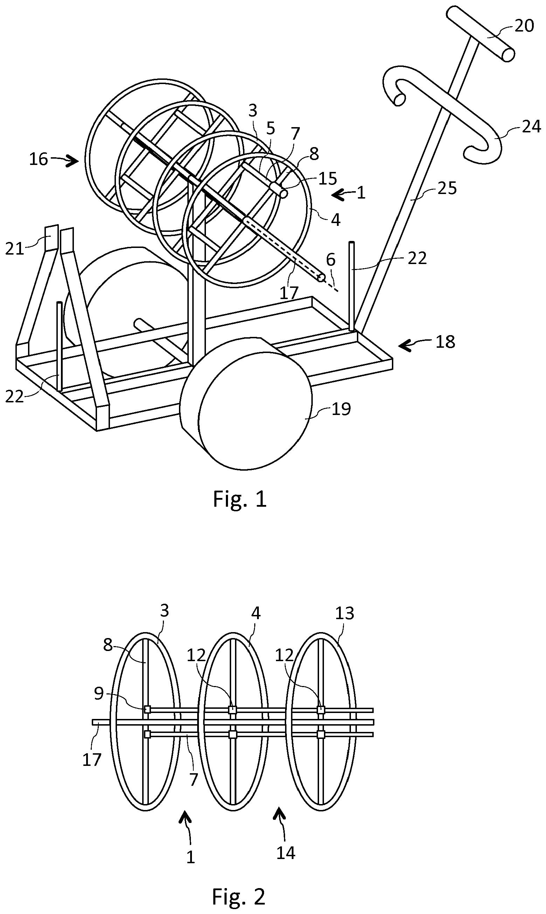

La présente invention, illustrée aux fig. 1 à 4, concerne un dispositif d'enroulement et/ou de déroulement comportant une bobine primaire 1, sur laquelle peut être enroulé et/ou déroulé un fil 2. La bobine primaire 1 comprend un premier flasque 3 et un deuxième flasque 4, liés par un noyau 5. La bobine primaire 1 est mobile en rotation autour d'un axe 6.

Le noyau 5 peut comprendre au moins trois barreaux 7, fixés chacun à un rayon 8 du premier flasque 3 par un moyen de fixation 9. Le moyen de fixation 9 permet de fixer les barreaux 7 de manière réglable le long des rayons 8 du premier flasque 3, de manière à faire varier le diamètre du noyau 5 en fonction des besoins de l'utilisateur. Le diamètre du noyau 5 peut par exemple varier en fonction du type de fil 2 utilisé, de sa longueur, de son épaisseur et de son élasticité.

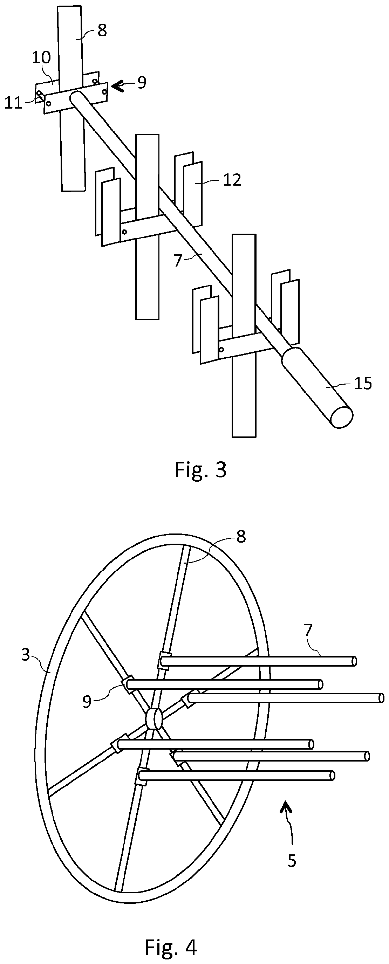

Dans un mode de réalisation préféré de l'invention représenté en fig. 4, le noyau 5 comprend six barreaux 7, ce qui permet un bon maintien sans déformation importante du fil 2 autour du noyau 5.

L'utilisation d'un autre moyen permettant de faire varier le diamètre du noyau 5 est possible sans sortir de la présente invention. On peut par exemple disposer de différents noyaux 5 d'un diamètre différent, et monter sur la bobine primaire 1 le noyau 5 voulu.

Le flasque peut comprendre un cerceau et des rayons, de préférence six rayons comme représentés sur la fig. 4. Le flasque peut aussi consister en un disque. On peut alors disposer par exemple des fentes radiales sur ce disque, permettant la fixation de barreaux de manière réglable le long d'un rayon, de sorte à faire varier le diamètre du noyau.

L'expression « de manière réglable le long d'un rayon » n'implique pas forcément la construction du flasque par des rayons et un cerceau. Dans cette expression, le mot « rayon » peut aussi signifier le segment partant de l'axe et allant vers la circonférence, de sorte que cette caractéristique permet de faire varier le diamètre du noyau.

Comme illustré en fig. 3, le moyen de fixation 9 peut comprendre deux barrettes 10, pincées de part et d'autre du rayon 8 par deux fixations 11 aptes à être serrées et desserrées, par exemple des vis 11. Le barreau 7 est fixé sur une des barrettes 10, par exemple par soudure. Il est ainsi possible de changer le positionnement d'un barreau 7 sur son rayon 8 en desserrant les fixations 11, puis en coulissant les barrettes 10 le long du rayon jusqu'à la position voulue, puis en resserrant les fixations 11. Tout moyen de fixation 9 permettant de faire varier la position du barreau 7 sur le rayon 8 peut être utilisé, par exemple un moyen de fixation 9 coulissant le long du barreau 7, tel qu'un cylindre coulissant, et qu'on peut fixer par une vis de serrage, et sur lequel le barreau 7 est soudé.

Le deuxième flasque 4 peut comporter des butées de réception 12 concaves, par exemple en forme de U, afin de recevoir les barreaux 7 fixés au premier flasque 3. La distance entre les barreaux 7 et l'axe 6, dont le double correspond au diamètre du noyau 5, est ainsi maintenue lorsque le fil exerce une pression sur les barreaux 7 vers l'axe 6.

Dans un mode de réalisation illustré en fig. 2, la bobine primaire 1 peut également comporter un troisième flasque 13, formant avec le deuxième flasque 4 une deuxième bobine 14, coaxiale avec la bobine primaire 1. Un second fil 2 peut être enroulé ou déroulé sur la deuxième bobine 14, en même temps qu'un premier fil 2 est enroulé ou déroulé sur la bobine primaire 1. Dans ce mode de réalisation particulier, les barreaux 7 fixés au premier flasque 3 sont suffisamment longs pour atteindre le troisième flasque 13 et former le noyau 5 de la deuxième bobine 14, comme illustré en fig. 3. Le troisième flasque 13 peut comporter des butées de réception 12 permettant de maintenir les barreaux 7 à distance de l'axe 6, et donc de maintenir le diamètre du noyau 5 lorsque le fil 2 exerce une pression sur les barreaux 7 vers l'axe 6.

La présence des butées de réception 12 sur le troisième flasque 13 peut ne pas être nécessaire, les barreaux 7 étant suffisamment maintenus par les butées de réception 12 du deuxième flasque 4.

On peut aussi prévoir que les barreaux 7 sont maintenus exclusivement par leur moyen de fixation 9, et ne pas prévoir de butées de réception 12 même sur le deuxième flasque 4. Cela dépend du type de moyen de fixation 9 choisi, de la largeur de la bobine 1, 14, et des efforts appliqués par le fil 2 en cours d'enroulement ou de déroulement.

L'écartement entre le deuxième flasque 4 et le troisième flasque 13 peut être différent de l'écartement entre le premier flasque 3 et le deuxième flasque 4, et donc les bobines 1, 14 peuvent être de largeur différentes. Les deux bobines 1, 14 peuvent par exemple être utilisées pour enrouler et/ou dérouler simultanément des fils 2 de types différents.

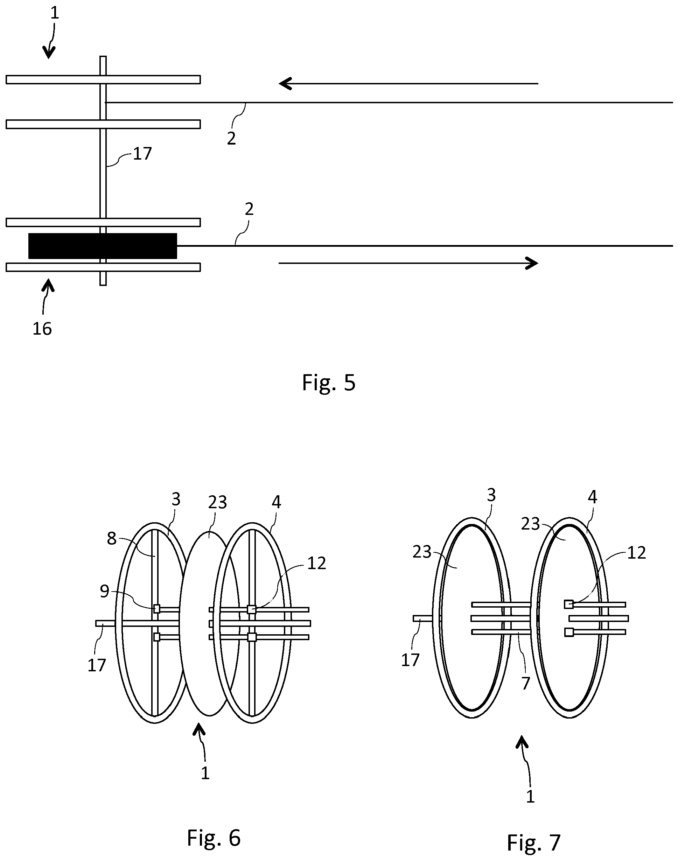

Alternativement ou en complément du troisième flasque 13, une ou plusieurs plaques 23, comme représenté en fig. 6, peuvent être disposées entre les flasques 3, 4, 13 afin de séparer la bobine primaire 1 en plusieurs compartiments, chacun pouvant accueillir un fil 2 distinct.

Comme illustré en fig. 7, une plaque 23 peut également être placée contre un flasque 3, 4, 13 afin d'empêcher l'accès au fil 2 situé dans la bobine primaire 1 par l'ouverture dans le flasque entre les barreaux 8. La sécurité du dispositif est ainsi améliorée, notamment lors des opérations de déroulement et/ou enroulement.

La bobine primaire 1 peut être actionnée manuellement par le moyen d'une poignée 15. La poignée 15 peut être montée sur l'extrémité d'un barreau 7 qui n'est pas fixée sur le premier flasque 3. La poignée peut être facilement montée et démontée sur n'importe lequel des barreaux 7 de la bobine primaire 1, afin par exemple de pouvoir amorcer le mouvement de rotation de la bobine primaire 1 dans la direction voulue.

Le dispositif selon l'invention peut comporter un frein, qui peut par exemple être utilisé pendant le déroulage afin que le fil 2 ne se déroule pas trop rapidement par l'inertie du mouvement de rotation de la bobine primaire 1.

Dans le mode de réalisation illustré en fig. 1 et 5, le dispositif d'enroulement et/ou de déroulement selon l'invention comporte une bobine secondaire 16, mobile en rotation autour de l'axe 6 et décalée le long de cet axe par rapport à la bobine primaire 1. Une deuxième bobine 14 peut être jointe à la bobine secondaire 16 de la même manière qu'à la bobine primaire 1 tel que décrit plus haut. Le dispositif comporte également un arbre 17 mobile autour de l'axe 6 et qui peut être ou non solidaire des bobines 1, 16. Dans le cas où ledit arbre 17 est disposé solidaire des bobines 1 et 16, les bobines 1, 16 sont alors solidaires en rotation l'une de l'autre et le dispositif peut être utilisé par exemple, comme illustré en fig. 5, pour enrouler un fil 2 autour de la bobine primaire 1 tout en déroulant un fil 2 de la bobine secondaire 16, dont l'enroulement a été fait dans le sens contraire de celui qui est entrain de se faire sur la bobine primaire 1. On peut se servir de l'effort exercé manuellement sur le fil à dérouler pour produire l'enroulement.

Le dispositif peut encore être motorisé. Il peut alors être utile de prévoir un limiteur de couple, ou un détecteur de tension du fil permettant de débrayer le moteur en cas d'une surtension pouvant risquer d'endommager le fil ou de le déchirer.

Dans le cadre d'un remplacement de fil 2 de palissage, on peut ainsi parcourir un rang de vignes en enroulant le fil 2 usé sur la bobine primaire 1, tout en déroulant le fil 2 nouveau de la bobine secondaire 16.

Le dispositif peut aussi être placé en extrémité du rang. On tire sur le fil 2 à dérouler en parcourant le rang, et le fil 2 usé s'enroule en même temps sur le dispositif.

La bobine secondaire 16 peut être similaire à la bobine primaire, comporter deux ou trois flasques 3, 4, 13, et une poignée 15. Des barreaux 7 peuvent former le noyau 5 de la bobine secondaire 16, qui peut avoir un diamètre identique ou différent du noyau 5 de la bobine primaire 1.

Comme illustré en fig. 1, le dispositif d'enroulement et/ou de déroulement selon l'invention peut être fixé à un châssis 18, peut être placé sur une paire de roues 19, afin qu'il soit facilement déplaçable, par exemple le long de rangs de vignes. Le dispositif peut alors être par exemple déplacé par un homme, au moyen d'un manche 20 fixé au châssis 18, ou par un tracteur, grâce à un moyen d'accrochage 21 fixé au châssis 18.

Le dispositif d'enroulement et/ou de déroulement peut être fixé au châssis 18 de façon à ce qu'une rotation du dispositif par rapport au châssis 18 soit possible selon un axe vertical. Ceci permet de pouvoir utiliser le dispositif d'enroulement et/ou de déroulement quelle que soit l'orientation du châssis 18 par rapport à la direction d'enroulement et/ou de déroulement du fil 2. Ceci est particulièrement utile lorsque le châssis 18 est fixé à un tracteur, par exemple pour placer le tracteur dans une direction perpendiculaire aux rangs de vignes, ce qui permet de réduire l'espace nécessaire à l'extrémité des rangs.

Le dispositif selon l'invention peut encore comprendre des pieux 22 verticaux, par exemple un à l'avant et un à l'arrière du châssis 18. Les pieux 22, mobiles verticalement en translation, peuvent être enfoncés dans la terre afin d'immobiliser le dispositif dans une position stable.

Le dispositif selon l'invention peut enfin comprendre un guide 24 servant à guider le fil 2 lors de sa sortie du dispositif pendant le déroulement, ou lors de son entrée dans le dispositif pendant l'enroulement. La présence du guide 24 permet de limiter les risques de bourrage et d'améliorer la sécurité. Le guide 24 peut être placé sur une tige 25, et sa position sur la tige peut être réglable afin qu'il soit plus ou moins proche de l'axe d'enroulement et/ou de déroulement.

Le dispositif selon l'invention peut être utilisé pour enrouler et/ou dérouler tout type de fil 2, par exemple des fils électriques, des fils barbelés ou des fils de nylon.

Le dispositif permet d'enrouler et/ou dérouler simultanément deux fils 2 de nature différente, par exemple un premier fil 2 sur la bobine primaire 1 et un second fil 2 sur la bobine secondaire 16. Or dans certains cas, les deux fils 2 nécessitent des noyaux 5 de diamètres différents. En effet un noyau 5 au diamètre plus large peut être nécessaire pour un fil 2 qu'on ne peut pas plier au-delà d'un certain rayon de courbure, alors qu'un noyau 5 au diamètre plus réduit peut être nécessaire pour un fil 2 plus long et/ou plus épais, qui prend plus de place une fois enroulé. Les diamètres des noyaux 5 des bobines 1, 16 sont alors distincts et si ils sont constitués de barreaux 7, ces derniers sont disposés à une distance distincte de l'axe 6, de sorte à former un diamètre distinct pour chaque noyau 5. Il se peut aussi que les fils 2 nécessitent des bobines 1, 14 de largeur différente, en fonction par exemple du volume nécessaire pour accueillir le fil 2 enroulé. Le dispositif selon l'invention est flexible et s'adapte aux besoins des fils 2 de natures différentes, notamment en termes de diamètre de noyau 5 et de largeur de bobine 1, 14.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Dispositif d'enroulement et/ou de déroulement de fils (2) comportant au moins une bobine primaire (1) mobile autour d'un axe (6), munie d'au moins un premier et un deuxième flasques (3, 4) et d'un noyau (5), ledit noyau (5) comportant un moyen de réglage de son diamètre, **caractérisé en ce qu'**il comporte en outre un arbre (17) mobile autour dudit axe (6), et au moins une bobine secondaire (16) mobile autour dudit axe (6), les bobines primaire (1) et secondaire (16) comportant chacune un moyen de solidarisation audit arbre (17).

2. Dispositif selon la revendication précédente, dans lequel ledit noyau (5) comporte au moins trois, de préférence six barreaux (7) fixés chacun audit premier flasque (3) de manière réglable le long d'un rayon (8) dudit premier flasque (3).

3. Dispositif selon la revendication précédente, dans lequel lesdits barreaux (7) sont fixés chacun à un rayon (8) par le moyen de deux barrettes (10) pincées de part et d'autre d'un rayon (8) par deux fixations (11) aptes à être serrées et desserrées, comme des vis.

4. Dispositif selon l'une des revendications 2 ou 3, dans lequel ledit deuxième flasque (4) comporte des butées de réception (12), en particulier des butées de réception concaves, aptes à recevoir chacune un barreau (7), de sorte à maintenir le diamètre du noyau (5).

5. Dispositif selon l'une des revendications 2 à 4, dans lequel ladite bobine primaire (1) comporte au moins un troisième flasque (13), formant avec ledit deuxième flasque (4) une deuxième bobine (14), lesdits barreaux (7) ayant une longueur suffisante pour former aussi le noyau (5) de ladite deuxième bobine (14).

6. Dispositif selon la revendication précédente, dans lequel l'écartement entre les deuxième et troisième flasques (4, 13) est différent de l'écartement entre les premiers et deuxième flasques (3, 4), de sorte à former deux bobines (1, 14) de largeur différente.

7. Dispositif selon l'une des revendications 2 à 6 comportant une poignée (15) adaptable à l'extrémité distale dudit premier flasque (3) d'un barreau (7), de sorte à permettre un actionnement rotatif manuel de ladite bobine primaire (1).

8. Dispositif selon l'une des revendications précédentes, dans lequel le diamètre du noyau (5) de la bobine secondaire (16) est différent du diamètre du noyau (5) de la bobine primaire (1).

9. Dispositif selon l'une des revendications précédentes, comportant un guide (24) du fil (2) en entrée et/ou en sortie de la bobine primaire (1) et/ou secondaire (16), de préférence la distance entre ledit guide (24) et ledit axe (6) étant réglable.

10. Dispositif selon l'une des revendications précédentes, comportant une plaque (23) située à l'intérieur de la bobine primaire (1) et/ou secondaire (16), et permettant de diviser ladite bobine (1, 16) en plusieurs compartiments aptes à recevoir différents fils (2).

11. Dispositif selon l'une des revendications précédentes, comportant une plaque (23) située à l'intérieur de la bobine primaire (1) et/ou secondaire (16), contre un flasque (3, 4, 13), de manière à empêcher l'accès, par exemple d'une main, à l'intérieur de ladite bobine (1, 16) par une ouverture dans ledit flasque (3, 4, 13).

12. Procédé d'enroulage et/ou de déroulage de fils (2) par le moyen d'un dispositif selon l'une des revendications précédentes, **caractérisé en ce que** la bobine primaire (1) enroule un fil (2) pendant que la bobine secondaire (16) déroule un fil (2).
